(19) Europäisches Patentamt
European Patent Office
Office européen des brevets

(11) **EP 2 428 526 A1**

(12) **EUROPEAN PATENT APPLICATION**

(43) Date of publication:
**14.03.2012 Bulletin 2012/11**

(51) Int Cl.:
***C08F 10/02*** *(2006.01)*

(21) Application number: **10176381.1**

(22) Date of filing: **13.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Borealis AG**
**1220 Vienna (AT)**

(72) Inventors:
• **Lentzakis, Helen**
  **TK 74100 Kalithea Rethymno (GR)**

• **Lylykangas, Mikko**
  **01520 Vantaa (FI)**
• **Bergstra, Michiel**
  **00810 Helsinki (FI)**
• **Vahteri, Markku**
  **06100 Porvoo (FI)**
• **Aho, Jani**
  **00910 Helsinki (FI)**

(74) Representative: **Kador & Partner**
  **Corneliusstrasse 15**
  **80469 München (DE)**

(54) **Process for producing polyethylene with improved homogeneity**

(57)    Process for producing polyethylene compositions, like LLDPE, MDPE or HDPE, with a high level of homogeneity which comprises the steps of

a) preactivating the total amount of a Ziegler-Natta procatalyst

with the total amount of a cocatalyst, which cocatalyst comprises an organoaluminium compound,

in order to get a preactivated Ziegler-Natta catalyst system,

b) introducing the preactivated Ziegler-Natta catalyst system into a prepolymerisation reactor, wherein the preactivated Ziegler-Natta catalyst system is prepolymerised with at least one $C_2$-$C_{io}$-alpha-olefin monomer and optionally one or more $C_3$-$C_{10}$-alpha-olefin comonomer,

in order to get a prepolymerisation product,

c) introducing the prepolymerisation product into a first polymerisation reactor, which comprises a slurry reactor, wherein the prepolymerisation product is further polymerised with ethylene monomers and optionally one or more $C_3$-$C_{10}$-alpha-olefin comonomers

in order to get a first polymerisation product,

d) introducing the first polymerisation product into a second polymerisation reactor, wherein the first polymerisation product is further polymerised with ethylene monomers and optionally one or more $C_3$ to $C_{lo}$-alpha-olefin comonomers

in order to get a second polymerisation product,

e) optionally performing one or two subsequent polymerisation steps in order to get a third or fourth polymerisation product,

f) further processing the obtained polymerisation product into pellets by extrusion; its use for forming articles, especially films with a low gel content.

EP 2 428 526 A1

**Description**

The present invention is related to a multi-step process for producing polyethylene, like linear low density polyethylene, medium density polyethylene and high density polyethylene, especially linear low density polyethylene, with a high degree of homogeneity and articles, especially films produced therefrom, the articles showing low gel content.

Polyethylene polymers, like linear low density polyethylene (LLDPE), medium density polyethylene (MDPE) and high density polyethylene (HDPE) can be prepared by a polymerisation process in the presence of catalyst compositions, which have essentially two components: a compound of a transition metal belonging to any of groups 4 to 6 of the Periodic Table of Elements (IUPAC 2007) which is often called a procatalyst, and a compound of a metal belonging to groups 1, 2 or 13 of said Table which is the s.c. cocatalyst. This kind of Ziegler-Natta catalyst composition has been further developed by depositing the procatalyst on a less or more inert and particulate support and by adding to the catalyst composition in the stages of its preparation several additives, among others electron donating compounds.

The use of Ziegler-Natta catalyst procatalysts in multi-step polymerisation for producing such polyethylene polymers however often results in the production of a polymer containing undesirable inhomogeneities, which can for example be seen as gels in films produced therefrom.

Typical multi-step polymerisation processes include liquid phase polymerisation, e.g. solution or slurry polymerisation and gas phase polymerisation using conventional reactors connected in series, e.g. loop reactors, slurry tanks and gas phase reactors, in any order.

Thus, different combinations can be used, e.g. gas phase/gas phase, slurry phase/slurry phase or slurry phase/gas phase.

Especially polymerisations run in a multi-step process comprising a slurry reactor, like a loop reactor, as a first actual polymerisation reactor, suffer from the inhomogeneity problem.

One reason for creating undesirable inhomogeneities is that the residence time distribution (RTD) of the catalyst particles in the different reactors is wide, ranging from less than a minute to several hours.

It can therefore happen that a fraction of catalyst particles that passes very fast through the first reactor will have a very low degree of low molecular weight and high degree of high molecular weight polymer in the final product and on the other hand other fractions of catalyst particles may consist of mainly low molecular weight polymer, which means that the interparticle homogeneity is poor.

This poor interparticle homogeneity gives as a negative side effect two related problems:

    (i) gel formation in the final plastic materials and

    (ii) reduced operability of the gas phase reactor due to chunking, hot spots and wall sheeting.

In both cases the main cause of the problem is the fraction of catalyst particles that spend a very short time in the loop reactor compared to the average residence time of the particles in the loop.

The problem with undesirable inhomogeneities is even boosted in case of Ziegler-Natta catalysts with a low initial polymerisation rate, i.e. the catalyst is a so called slow starter, where the short residence time in the loop is not sufficient to produce a sufficient high polymerisation degree for all particles entering a subsequent reactor, e.g. a gas phase reactor.

It is known that homogeneity of a multimodal polymer composition can be improved by applying multiple compounding steps and/or particular compounding conditions to the resin coming from the reactor. These measures, however, have the disadvantage that they are associated with a significant increase in production costs for the composition.

Therefore it is an object of the present invention to provide a process for producing such a multimodal polyethylene composition having improved homogeneity directly after its production.

As mentioned above two main parameters influence the composition distribution among particles: the residence time distribution in the process and the catalyst activity as a function of residence time.

From EP 0 797 599 it is known that a prepolymerisation step can influence these two parameters to reduce inhomogeneities in the produced polymer.

Nevertheless the degree of homogeneity is still too low for some special uses and this may adversely effect e.g. surface properties and other properties of the produced polymer. Further, when compounding these polymers e.g. for the production of films gel particles often occur.

Therefore, a need remains to reduce the degree of inhomogeneity in polyethylene compositions produced in a multistage process, wherein the first stage is carried out in a slurry reactor.

WO 2006/014475 discloses a multi-stage process for producing ethylene polymer compositions. According to WO 2006/014475 articles produced from such polymers have low gel levels.

The process comprises polymerising ethylene, alone, or with a comonomer, to produce ethylene polymer in a first stage, transferring the polymer produced in the first stage into a second stage, in which second stage ethylene is polymerised, alone, or with a comonomer, in the presence of polymer produced in the first stage, and wherein the first stage is a slurry polymerisation stage, and the polymerisation is carried out in the presence of a catalyst system comprising: a) a Ziegler-Natta procatalyst and b) an organoaluminium compound as cocatalyst.

It is mentioned that the multistage process optionally is preceded by a catalyst prepolymerisation step and that the catalyst precursor may be partially activated using a cocatalyst compound before it is introduced into the polymerisation reactor, but there are no examples in WO 2006/014475 using such steps.

WO 2004/050722 discloses a Ziegler-Natta catalyst system with which polymers with a high degree of homogeneity should be obtained in a multi-step process. This system comprises a procatalyst and a cocatalyst which is a mixture of at least two organoaluminium compounds. It is mentioned that the multi-step process may include additional precontacting or prepolymerisation stages, where the catalyst is pretreated or prepolymerised before it is introduced into the first polymerisation stage, but there are no examples in WO 2004/050722 using these steps.

Such partially activation or precontacting of the catalyst precursor, either before a prepolymerisation step or after it, is described, for example, in WO 96/34899, EP 0 435 557 or US 4 349 648.
According to WO 96/34899 the homo- or copolymerisation of olefins is more efficient and more specific and produces purer polyolefins if it comprises steps wherein

a) a first amount of cocatalyst and at least one-half of the total amount of procatalyst are contacted in order to obtain a precontact product;
b) the precontact product, a second amount of cocatalyst and one or more polymerisable olefins are contacted in order to produce a first homo- or copolymerisation product or alternatively a prepolymerisation product;
c) alternatively, the prepolymerisation product, a third amount of cocatalyst and one or more polymerisable olefins are contacted in order to produce a second homo- or copolymerisation product; and
d) the first homo- or copolymerisation product, the prepolymerisation product or second homo- or copolymerisation product is recovered.

It is noted that by contacting only a portion of the cocatalyst with the procatalyst and by introducing the so-called precontact product thus obtained into the polymerisation zone together with the rest of the cocatalyst, much better polymerisation results can be achieved than by carrying out a precontacting by using the entire amount of procatalyst and cocatalyst. According to the examples of WO 96/34899 only propylene polymers were produced.

US 4 349 648 describes that the precursor may be partially activated before it is introduced into the polymerisation reactor by treating it with an organoaluminium compound. It is stated that in order to produce copolymers which can be processed into films having improved optical properties, it is necessary to complete the activation of the precursor with a mixture of a dihydrocarbyl aluminium halide compound and a trihydrocarbyl aluminium compound.

Also according to EP 0 435 557 the precursor may be partially activated before it is introduced into the polymerisation reactor. In such a case tri-n-hexyl aluminium or diethyl aluminium chloride are preferably used as pre-reducing agents to partially activate the precursor.

Although some suggestions exist how to increase homogeneity in polyethylene compositions produced in a multistage process, wherein the first stage is carried out in a slurry reactor, and thus to reduce gel levels in films produced therefrom, none of them solves the problem to a satisfactory extend.

Thus it is a further object of the present invention to provide a polymerisation process which produces polyethylene compositions with improved homogeneity directly after the polymerisation process resulting in improved gas phase operation and lowered gel formation in the final articles produced therefrom.

It has now surprisingly and contrary to the teachings of prior art been found that preactivation of the total amount of Ziegler-Natta procatalyst with the total amount of cocatalyst for a few minutes before entering a prepolymerisation step of a multi-stage process comprising a slurry polymerisation step as first stage leads to a significant increase of the homogeneity of the produced polyethylene compositions and therefore to a significantly decreased amount of gels in articles, like films, produced therefrom.

Thus the present invention provides in a first embodiment a process for producing polyethylene compositions with a high level of homogeneity which comprises the steps of

a) preactivating the total amount of a Ziegler-Natta procatalyst, which procatalyst comprises

i) an Al compound having the formula $Al(alkyl)_xCl_{3-x}$ (I), where alkyl is an alkyl group with 1 to 12 C-atoms and $0 \leq x \leq 3$,

ii) a magnesium hydrocarbyloxy compound of formula $Mg(OR^1h_{-n}(R^2)_n$ (II), wherein each R' and $R^2$ is independently a $C_l$-$C_{20}$ hydrocarbon residue which may optionally be substituted with halogen and $0 < n < 2$ and

iii) a chlorine-containing titanium compound of the formula $Cl_yTi(OR^3)_{4-y}$ (III), wherein $R^3$ is a $C_2$-$C_{20}$ hydrocarbon residue and y is 1, 2, 3 or 4 and

compounds a), b) and c) being deposited on a particulate inorganic support;
with the total amount of a cocatalyst, which cocatalyst comprises an organoaluminium compound having formula $R_{3m-p}Al_mX_p$ (IV), wherein R is a $C_i$-$C_{12}$ alkyl, X is a halogen, m is 1 or 2 and $0 \leq p \leq (3m-1)$,
in order to get a preactivated Ziegler-Natta catalyst system,
b) introducing the preactivated Ziegler-Natta catalyst system into a prepolymerisation reactor, wherein the preactivated Ziegler-Natta catalyst system is prepolymerised with at least one $C_2$-$C_{io}$-alpha-olefin monomer and optionally one or more $C_3$-$C_{io}$-alpha-olefin comonomers in order to get a prepolymerisation product,
c) introducing the prepolymerisation product into a first polymerisation reactor, which comprises a slurry reactor, wherein the prepolymerisation product is further polymerised with ethylene monomers and optionally one or more $C_3$-$C_{lo}$-alpha-olefin comonomers in order to get a first polymerisation product,
d) introducing the first polymerisation product into a second polymerisation reactor, wherein the first polymerisation product is further polymerised with ethylene monomers and optionally one or more $C_3$-$C_{lo}$-alpha-olefin comonomers in order to get a second polymerisation product,
e) optionally performing one or two subsequent polymerisation steps in order to get a third or fourth polymerisation product,
f) further processing the obtained polymerisation product into pellets by extrusion.

According to the present invention the process for producing polyethylene compositions comprises a preactivating step a).
In this step the total amount of the Ziegler-Natta procatalyst is contacted with the total amount of cocatalyst.
The term "total amount" means that substantially all of the procatalyst and/or cocatalyst, i.e. at least 95.0wt%, preferably at least 98.0wt%, more preferably at least 99.5wt%, is used for preactivation.
The procatalyst used according to the invention comprises a reaction product of i) an alkyl aluminium chloride, which is an internal soluble chlorination agent and which also has a cocatalytically impact, ii) a soluble magnesium hydrocarbyloxy compound (named hereafter a magnesium complex) and iii) a titanium compound which contains chlorine.
The catalyst components i), ii) and iii) are deposited on a suitable inorganic catalyst support to give said procatalyst.
There are two possible ways for depositing the catalyst components on a suitable inorganic catalyst support, i.e. by sequentially contacting the support with the above mentioned compounds, as described in EP 0 688 794 or EP 0 835 887, or by first preparing a solution from the components i), ii) and iii) and then contacting the solution with a support, as described in WO 01/55230, all of which are herein fully incorporated by reference.
Variant I, according to EP 0 688 794 or EP 0 835 887, comprises the following steps:

- the inorganic support is contacted with the alkyl aluminium chloride i) to give a first reaction product,
- the first reaction product is contacted with the magnesium complex ii) to give a second reaction product,
- the second reaction product is contacted with the titanium compound iii) to give said procatalyst.

Variant II, according to WO 01/55230, comprises the following steps:

- reacting the magnesium complex ii) with the alkyl aluminium chloride i) in a non polar hydrocarbon solvent in which said magnesium complex is soluble to produce a solution (S1)
- contacting the solution (S1) with the titanium compound iii) to produce a solution (S2) and
- contacting solution (S2) with the inorganic support to give said procatalyst.

Preferably the procatalyst used according to the invention is prepared according to variant I.
The procatalyst used according to the invention comprises catalyst components i), ii) and iii).
Catalyst component i) is an aluminium compound of the formula $Al(alkyl)_xCl_{3-x}$ (I), wherein alkyl is an alkyl group of 1 to 12 C-atoms, preferably 1 to 8 C-atoms, more preferably 1 to 6 C-atoms and $0 \leq x \leq 3$, preferably x is 1 or 2.
The alkyl group can be linear, branched or cyclic, or a mixture of such groups.
Suitable aluminium compounds are for example dimethyl aluminium chloride, diethyl aluminium chloride, diisobutyl aluminium chloride, ethyl aluminium dichloride, methyl aluminium dichloride and triethylaluminium or mixtures therefrom.
Preferably used as catalyst component i) are alkyl aluminium dichlorides, more preferably ethyl aluminium dichloride (EADC).
The magnesium complex ii) of formula $Mg(OR^1)_{2-n}(R^2)_n$ (II) used in the procatalyst synthesis is totally soluble in non-polar hydrocarbon solvents.

In the formula (II) each $R^1$ and $R^2$ is independently a $C_l$-$C_{20}$ hydrocarbon residue, e.g. a $C_2$-$C_{15}$ group, preferably $C_3$-$C_{10}$ group, such as $C_4$-$C_8$ group, e.g. linear, cyclic or branched alkyl, aryl, aralkyl or alkaryl, suitably a linear or branched alkyl, preferably a branched alkyl, such as 2-ethyl-1-hexyl, or ethyl, propyl, butyl, pentyl, hexyl, heptyl, octyl, which may optionally be substituted with halogen and $0 \leq n < 2$.

Said magnesium complex may be commercially available or, preferably, can be prepared by reaction of a magnesium dihydrocarbyl (e.g. dialkyl) compound of the formula $Mg(R2)2$ wherein each $R^2$ is independently as defined above with an alcohol $R^1OH$, wherein R' is as defined above.

Preferred magnesium dialkyl starting compounds include dibutyl magnesium, butyl ethyl magnesium or butyl octyl magnesium. More preferably butyl octyl magnesium (BOMAG) is used.

Suitable alcohols include octanol, hexanol, butanol, 2-ethyl-1-hexanol, 2-propyl-pentanol and 2-methyl-1-pentanol. More preferably 2-ethyl-1-hexanol is used.

The magnesium dialkyl/alcohol molar ratio is from 1:1 to 1:4, preferably from 1:1.5 to 1:3.5, more preferably from 1:1.7 to 1:2.0.

The reaction of the magnesium dialkyl and the alcohol may take place at any temperature but preferably takes place at a low temperature, e.g. 0-40°C, especially at room temperature. Component iii) is chlorine-containing titanium compound of the formula $ClyTi(OR_3)4-y$ (111), wherein $R^3$ is a $C_1$-$C_{20}$ hydrocarbon residue, preferably a $C_2$-$C_{10}$ and more preferably a $C_2$-$C_8$ hydrocarbon residue. y is 1, 2, 3 or 4, preferably 3 or 4 and more preferably 4.

Suitable titanium compounds include trialkoxy titanium monochlorides, dialkoxy titanium dichloride, alkoxy titanium trichloride and titanium tetrachloride. Preferably titanium tetrachloride is used as component iii).

In each preparation method as described above, the components i), ii) and iii) may be added in molar ratios known in the art. Generally in the final solid procatalyst, the molar ratio of Mg:Ti can be e.g. between 10:1 to 1:10, preferably 5:1 to 1:1. The molar ratio of Ti:Al can be e.g. between 10:1 to 1:2, e.g. 3:1 to 1:1.

The particulate inorganic support can be an inorganic oxide support, such as silica, alumina, titania, silica-alumina and silica-titania. Preferably, the support is silica.

The surface area, pore volume and particle size of the silica can be chosen according to the requirements of the specific polymerisation process, in which the catalysts will be used. Typically, silica particles having a surface area in the range of from about 10 to about 700 m$^2$/g (BET method), pore volume in the range of from about 0.1 to about 6.0 cm$^3$/g and average particle size in the range of from about 10 to about 100 pm can be used. However, it has turned out that special advantages can be obtained if the support has an average particle size from 15 to 30 $\mu$m, preferably from 18 to 25 $\mu$m.

The silica may be in granular, agglomerated, fumed or other form.

It is further preferred that the support material is calcinated, i.e. heat treated under air and then with a non-reactive gas such as nitrogen. This treatment is preferably done at a temperature in excess of 100 °C, more preferably 200 °C or higher, e.g. 200-800 °C, particularly about 600 °C. The calcination treatment is preferably effected for several hours, e.g. 2 to 30 hours, more preferably about 10 hours.

Examples of suitable support materials, which are commercially available, are, for instance, ES747JR, produced and marketed by Ineos Silicas (former Crossfield), and SP9-491, Sylopol 55SJ, produced and marketed by Grace, etc..

A most preferred procatalyst is obtained by a process according to Variant I, as described in EP 0 688 794 or EP 0 835 887, using EADC as catalyst component i), a magnesium complex ii) prepared by reacting BOMAG and 2-ethyl-1-hexanol, and titanium tetrachloride as component iii), which are deposited on a silica support.

The procatalyst is preferably suspended into a highly viscous carrier fluid medium such as oil and/or wax to form a thick wax-like suspension which, however, can still be dosed by pumping.
The medium used is preferably inert towards the procatalyst itself and also towards other substances possibly present. The carrier fluid preferably has such a high viscosity that the procatalyst does not easily settle or sedimentate. The viscosity at storage or pumping temperature (-20°C to 100°C) may be for example 4 to 20 Pas, typically 6 to 12 Pas, and especially 8 to 10 Pas. The fluid may be for example oil or wax, such as a poly-alpha-olefin oil or paraffin wax. The medium may be also a mixture of oil or wax in oil with lower viscosity. The procatalyst mixture may contain suitable additives for example in order to increase physical stability of the mixture or to achieve desired rheological properties.

The procatalyst is contacted with the cocatalyst which comprises an organoaluminium compound having formula $R_{3m-p}Al_mX_p$ (IV), wherein R is a $C_i$-$C_{12}$ alkyl, X is a halogen, m is 1 or 2 and $0 \leq p \leq (3m-1)$.
Examples of suitable cocatalysts are aluminium alkyls (p = 0) like trimethyl aluminium, triethyl aluminium, triisobutyl aluminium, tri-n-octyl aluminium and isoprenyl aluminium and aluminium alkyl halides (p > 0) like diethyl aluminium chloride, ethyl aluminium dichloride, dipropyl aluminium chloride, propyl butyl aluminium chloride, butyl aluminium dichloride, methyl aluminium dichloride and dimethyl aluminium chloride.
Preferably used are triethyl aluminium, triisobutyl aluminium, diethyl aluminium chloride (DEAC) or trimethyl aluminium (TMA) or mixtures therefrom.

The cocatalyst is typically used in excess to the titanium of chlorine-containing titanium compound. For instance, the molar ratio of the aluminium in the cocatalyst to the titanium in component iii) is from 1 to 500 mol/mol, preferably from 2 to 100 mol/mol, more preferably from 5 to 50 mol/mol and in particular from 10 to 40 mol/mol.

Generally the quantity of catalyst composition, comprising the procatalyst and the cocatalyst, used depends upon the nature of the catalyst composition, the reactor types and conditions and the properties desired for the polymer product.

The preactivating step a) can be carried out in any suitable equipment wherein mixing of the procatalyst and the cocatalyst is possible.

Thus suitable equipments include a vessel with mixing device, a rotor-stator, a T-mixer, a pipe system, a static mixer and the like.

The temperature for the preactivating step is also not critical, although preferably it is between -50°C and +100°C, more preferably between -20°C and +50°C and most preferably between -5°C and +30°C.

The time for the preactivation step is in the order of magnitude of 1 second up to 1 hour. Thus the contact time in the preactivation step is preferably within the range of 10 seconds up to 20 minutes, more preferably 30 seconds to 15 minutes and yet more preferably 1 minute to 10 minutes.

It is a preferred feature of the present invention that the total amount of procatalyst, i.e. 100wt% is contacted with the total amount of cocatalyst, i.e. 100wt%, which means that no further procatalyst and cocatalyst is added in any of the subsequent steps.

The preactivation product is then introduced in a prepolymerisation step b).

In the prepolymerisation, at least one alpha-olefin monomer (e.g. ethylene) is polymerised with the preactivation product as hereinbefore described to yield, for example, 0.1 to 1000 g polymer per gram of preactivation product. The polymer formed during prepolymerisation forms less than 10 % by weight, preferably less than 7 % by weight, typically less than 5 % by weight of the total weight of the final polymer. Still more preferably only 1-3 % of the total weight of the polymer is formed during any prepolymerisation step.

The prepolymerisation may be carried out in any type of continuously operating polymerisation reactor. Suitable reactors are continuous stirred tank reactors (CSTR), a loop reactor or a comparted reactor such as disclosed in WO 97/33920 or WO 00/21656 or a cascade of two or more reactors may be used.

Although the prepolymerisation may be carried out in a slurry polymerisation or a gas phase polymerisation, it is preferred to carry out the prepolymerisation as a slurry polymerisation, more preferably in a loop prepolymerisation reactor.

The prepolymerised catalyst may be produced using at least one alpha-olefin, such as any known olefin monomer used in polymerisation and copolymerisation, such as $C_2$-$C_{io}$ alpha-olefins. Preferably $C_2$-$C_{io}$ olefins, such as ethylene, propylene, 1-butene, 1-pentene, 1-hexene, 4-methyl-l-pentene, 1-heptene, 1-octene, 1-nonene and 1-decene are used. Most preferred alpha-olefins are ethylene and propylene with ethylene especially preferred. Optionally a $C_3$-$C_{10}$-alpha olefin comonomer, such as propylene, 1-butene, 1-pentene, 1-hexene, 4-methyl-l-pentene, 1-heptene, 1-octene, 1-nonene and 1-decene, can be added to the prepolymerisation step.

The prepolymerisation may be carried out in the presence of an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The amount of diluent may be adjusted according to particular needs but is usually not exceeding 90 weight % of the total amount of diluent and monomers.

The molecular weight of the prepolymer may be controlled by hydrogen as it is known in the art. Further, antistatic additive may be used to prevent the particles from adhering to each other or the walls of the reactor, as disclosed in WO-A-96/19503 and WO-A-96/32420.

The pressure is not critical and is typically from 1 to 150 bar, preferably from 10 to 100 bar.

The pressure is selected such that the fluid contained in the reactor, preferably loop reactor remains either in liquid or supercritical state at the operating temperature.

The temperature for the prepolymerisation step can be in the range of 0 to 90°C, preferably 15 to 75°C and more preferably in the range of 30 to 70°C.

The prepolymerisation is carried out at an average residence time of 5 minutes up to 90 min. Preferably the average residence time is within the range of 10 to 60 minutes and more preferably within the range of 20 to 50 minutes.

The reactants, preactivation product, alpha-olefin monomer, comonomer, additives and the like, may be introduced in the prepolymerisation reaction or reactor continuously or intermittently. Continuous addition is preferred to improve process stability. The prepolymerised catalyst may be withdrawn from the prepolymerisation reaction or reactor either continuously or intermittently. Again a continuous withdrawal is preferred.

It is noted that the reactants are to be free from catalyst poisons such as oxygen, moisture and oxygen containing or sulphur containing compounds. The catalyst poisons may be removed by treatment of the reactants in a known manner with molecular sieves, metal oxide catalysts and the like.

The so obtained prepolymerisation product is then, in step c) introduced into a first polymerisation reactor, which comprises a slurry reactor, wherein the prepolymerisation product is further polymerised with ethylene monomers and optionally one or more $C_3$-$C_{10}$-alpha-olefin comonomers, in order to get a first polymerisation product, and subsequently the first polymerisation product is introduced into a second polymerisation reactor, wherein the first polymerisation product is further polymerised with ethylene monomers and optionally one or more $C_3$-$C_{10}$-alpha-olefin comonomers in order to get a second polymerisation product.

The prepolymerisation product hereinbefore described is employed in an at least two-stage polymerisation process. In such a polymerisation the reactors are connected in series such that the products of one reactor are used as the starting materials in the next reactor. The polymerisation may be carried out continuously or batch wise.

According to the invention the first polymerisation reactor is a slurry reactor.

A suitable two-stage process can therefore be a slurry phase-slurry phase process or a slurry phase-gas phase process, the latter being preferred.

Optionally, the process according to the invention can comprise one or two additional polymerisation steps. These optional one or two additional polymerisation steps preferably comprise gas phase polymerisation steps.

The slurry and gas stages may be carried out using any conventional reactors known in the art. A slurry phase polymerisation may, for example, be carried out in a continuously stirred tank reactor; a batch-wise operating stirred tank reactor or a loop reactor. Preferably slurry phase polymerisation is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerisation step is a fluidized bed reactor.

The slurry and gas phase processes are well known and described in the prior art.

Multimodal polymers with respect to the molecular weight distribution (MWD) are produced in a multistage process, where lower molecular weight and higher molecular weight polymers (components) are produced in different polymerisation steps, in any order.

A relatively low density (or high molecular weight fraction) copolymer can be prepared in the first reactor and the relatively high density (or low molecular weight fraction) copolymer in the second reactor. This can be referred to as the reverse mode. Alternatively, the low molecular weight copolymer can be prepared in the first reactor and the high molecular weight copolymer in the second reactor. This can be referred to as the normal mode and is preferred.

The polyethylene composition according to the invention preferably is produced so that at least one of these fractions, preferably the high molecular weight (HMW) fraction, is produced in a gas-phase reaction.

Further preferred, one of the fractions of the polyethylene composition, preferably the low molecular weight (LMW) fraction, is produced in a slurry reaction, preferably in a loop reactor.

In a preferred embodiment of the invention the LMW fraction is produced first and the HMW fraction is produced in the presence of LMW fraction.

Most preferably, the polyethylene composition of the invention is produced in a two-stage process comprising a loop reactor and a gas phase reactor, whereby the LMW fraction of the polyethylene composition is first produced in the loop reactor and the HMW fraction is produced in the gas phase reactor in the presence of the LMW fraction. This type of process is developed by Borealis and known in the art as BORSTAR® technology, described e.g. in patent literature, such as in EP 0 517 868, WO-A-92/12182 and WO-A-96/18662.

The two-stage process can be combined with one or more, preferably one additional polymerisation steps. Such processes are for example described in EP 1 633 466 or EP 2 011 822.

The lower molecular weight polymer fraction is preferably produced in the slurry phase.

For slurry reactors the polymerisation medium typically comprises ethylene, optionally a comonomer and a catalyst system as hereinbefore described. The polymerisation usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

Hydrogen may be fed into the reactor to control the molecular weight of the polymer as known in the art. Furthermore, one or more alpha-olefin comonomers may be added into the reactor to control the density of the polymer product. The actual amount of such hydrogen and comonomer feeds depends on the catalyst that is used and the desired melt index (or molecular weight) and density (or comonomer content) of the resulting polymer.

In a typical slurry phase polymerisation the temperature is preferably in the range 40 to 115°C, preferably 60 to 110°C and in particular 70 to 100°C.

The reaction pressure is typically 1 to 150 bar, preferably 10 to 100 bar.

In some cases it may be preferred to conduct the polymerisation at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture. Such operation is described in US-A-5391654. In such operation the temperature is typically from 85 to 110 °C, preferably from 90 to 105 °C and the pressure is from 40 to 150 bar, preferably from 50 to 100 bar.

Polymerisation in the first reactor (i.e. a loop reactor) is typically carried out for 10 to 300 minutes, preferably 20 to 120 minutes and the most preferably 30 to 90 minutes.

At least part of the volatile components of the reaction medium (e.g. hydrogen) may then be removed. The product stream is then subjected to a second polymerisation stage.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

In the second polymerisation stage the HMW component of the polyethylene composition is preferably produced. The second stage is preferably carried out in the gas phase. The polymer produced in the second stage preferably comprises 90 to 10 %, preferably 70 to 30 %, more preferably 60 to 40 % by weight of the total copolymer composition (i.e. the LMW:HMW component weight ratio is preferably 10:90 to 90:10, preferably 30:70 to 70:30, more preferably 40: 60 to 60:40).

The slurry of the first polymerisation step is intermittently or continuously removed from the slurry phase reactor and transferred to a separation unit where at least the chain transfer agents (e.g. hydrogen) are separated from the polymer. The polymer containing the active catalyst is then introduced into a gas phase reactor where the polymerisation proceeds in the presence of additional ethylene, $C_4$-$C_{12}$ comonomer(s) and optionally chain transfer agent to produce the higher molecular weight copolymer fraction. Preferably no fresh catalyst and/or cocatalyst are added in the second polymerisation step.

As gas phase reactors preferably fluidized bed gas phase reactors, fast fluidized bed gas phase reactors or settled bed gas phase reactors can be used.

Ad fluidized bed gas phase reactors:

In a fluidized bed gas phase reactor an olefin is polymerised in the presence of a polymerisation catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer (s), eventual chain growth controllers or chain transfer agents, such as hydrogen, and eventual inert gas.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

The reactor may also include a mechanical agitator to further facilitate mixing within the fluidized bed. An example of suitable agitator design is given in EP-A-707513.

Ad fast fluidized bed reactor:

In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles.

Ad settled bed reactor:

In the settled bed the polymer flows downward in a plug flow manner in an environment containing reactive components in gaseous phase. The polymer powder is introduced into the bed from the top from where it flows downwards due to gravity.

Polymerisation in settled bed is disclosed, among others, in EP-A-1633466, EP-A-1484343 and WO-A-97/04015.

In the process according to the invention preferably a fluidized bed gas phase reactors is used for the second polymerisation step.

For gas phase reactors used according to the invention, the reaction temperature used will generally be in the range 60 to 115 °C (e.g. 70 to 110 °C), the reactor pressure will generally be in the range 10 to 30 bar, and the residence time will generally be 0.5 to 8 hours. Preferably the residence time in the gas phase reactor is 1 to 4 hours, more preferably 1.5 to 3 hours.

The polymerisation medium in the second stage typically comprises ethylene, comonomers (e.g. 1-butene, 1-hexene, or octene), nitrogen, propane and optionally hydrogen.

The properties of the fractions produced in the second step of a two-stage process can either be inferred from polymers, which are separately produced in a single stage by applying identical polymerisation conditions (e.g. identical temperature, partial pressures of the reactants/diluents, suspension medium, reaction time) with regard to the stage of a two-stage process in which the fraction is produced, and by using a catalyst on which no previously produced polymer is present. Alternatively the properties of the second component can be derived from an analysis of the LMW component and the final polymer. Such calculations can be carried out using various techniques, e.g. K. B. McAuley: Modelling, Estimation and Control of Product Properties in a Gas Phase Polyethylene Reactor. Thesis, McMaster University, August 1991 . or K. McAuley and J. McMacGregor, AIChE Journal, Vol. 37, no. 6, pages 825 - 835 . B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13 . In addition, subtracting GPC curves, when fractions of each polymer are known is possible.

Thus, although not directly measurable on the two-stage process products, the properties of the fractions produced in the second stage of such a two-stage process can be determined by applying either or both of the above methods. The skilled person will be able to select the appropriate method.

The comonomers which can be employed in both stages in the present invention include $C_3$-$C_{12}$ alpha olefins, preferably selected from but-1-ene, hex-1-ene, 4-methyl-pent-1-ene, hept-1-ene, oct-1-ene, and dec-1-ene, more preferably but-1-ene and hex-1-ene. Preferably hexene or butene, or a mixture of hexene and butene is used in both slurry and gas phases. In one embodiment of the invention only one comonomer is used. The comonomer is e.g. hexene or butene, preferably butene.

In another embodiment of the invention the polyethylene composition comprises at least two comonomers, such that the composition is a terpolymer. The two comonomers are preferably a mixture of hexene and butene. In a preferred two-stage process, the two or more, preferably two, comonomers can be added in the same polymerisation reactor or each comonomer in a different reactor. Thus, in case of a sequential reactors, such as slurry-gas phase reactor system, the two or more, suitably two, comonomers can both be added in the first reactor (i.e. slurry reactor) and in the subsequent reactor (e.g. the gas phase reactor). Alternatively, the one or more, preferably two comonomers, can be added to only one of the two-stage reactors, e.g. in case of loop and gas phase reactors, only one of these two reactors.

In a further embodiment the two comonomers are added each in different reactors, e.g. in a two-reactor system, one comonomer is added in the first reactor, such as slurry, preferably loop, and the other comonomer is added only in the subsequent reactor, such as gas reactor. Alternatively, one of the comonomers can be added in each reactor of a two-reactor system, and the other comonomer(s) only in one reactor.

If desired, the polymerisation may be effected in a known manner under supercritical conditions in the slurry, preferably loop reactor, and/or as a condensed mode in the gas phase reactor.

If the polymerisation process comprises one or two additional polymerisation steps, these steps are preferably performed in gas phase reactors, as described above.

Any combination of gas phase reactors can be used.

For example, the polymerisation product of the second polymerisation step, which is either a fluidized bed polymerisation step or a fast fluidized bed polymerisation step, preferably a fluidized bed polymerisation step is transferred into a third polymerisation reactor, which is for example a settled bed polymerisation reactor. The product from the third polymerisation step is optionally transferred into a fourth reaction step, which uses for example again a fluidized bed polymerisation reactor. From the fourth reaction reactor the polymer is recovered and sent to further processing.

The use of two or three subsequent fluidized bed polymerisation reactors is a further possibility.

The resulting polyethylene composition produced according to the above described process is multi-, preferably bimodal.

As used herein the terms "multi-modal" and "bimodal" are intended to cover polymers having at least two differently centred maxima along the x-axis of their molecular weight distribution curve as determined by gel permeation chromatography. In such a curve d(log(Mw)) is plotted as ordinate against log (Mw), where Mw is molecular weight.

The polyethylene composition produced according to the present invention can be a linear low density polyethylene (LLDPE), a medium density polyethylene (MDPE) or a high density polyethylene (HDPE). Preferably LLDPE or MDPE and more preferably LLDPE is produced.

The final multi-, preferably bimodal LLDPE produced according to the invention has a density according to ISO 1183 of less than 925 kg/m$^3$ and at least 900 kg/m$^3$.

The final LLDPE can have an overall comonomer content of 0.3 to 10 mol%.
Preferably, however, the final polymer has a comonomer content of 0.4 to 8 mol% and more preferably of 0.5 to 6 mol%. The amount of comonomer in the LLDPE produced in the second stage can be calculated based on the final amount present in the LLDPE, the amount in the polymer produced in the first stage and on the production split between the first and second stages.

The final LLDPE which results preferably has a $MFR_{21}$ of 0.1 to 100 g/10 min, preferably 0.5 - 70.0 g/10 min as measured according to ISO 1133 at 190 deg. C under a 21.6 kg load.

A bimodal LLDPE produced according to the present invention comprises a low molecular weight (LMW) fraction and a high molecular weight (HMW) fraction.

In a preferred embodiment, the LMW fraction is an ethylene copolymer which has preferably a density of at least 920 $kg/m^3$, a preferred density range being 930 to 960 $kg/m^3$.

Furthermore, preferably the LMW fraction has a weight average molecular weight Mw of 5000 to 50 000 g/mol, more preferably 10 000 to 50 000 g/mol.

The $MFR_2$ of the LMW fraction preferably is at least 50 g/10min, more preferably at least 100 g/10min. The upper limit for the $MFR_2$ of the LMW fraction is preferably 400 g/10min.

The comonomer content in the LMW fraction is preferably in the range of 0.0 to 3.0 mol%, preferably 0.1 to 2.5 mol% and more preferably 0.5 to 2.0 mol%.

In a particularly preferred method of the invention the LMW fraction produced in the first stage preferably comprises 10 to 90 % by weight, more preferably 30 to 70, still more preferably 40 to 60 % by weight of the total weight of the final polymer.

The final multi-, preferably bimodal MDPE produced according to the invention has a density according to ISO 1183 of at least 925 $kg/m^3$ and less than 950 $kg/m^3$.

The final MDPE can have an overall comonomer content of 0.1 to 2.5 mol %.
Preferably the final MDPE has a comonomer content of 0.5 to 2.3 mol %, more preferably 1 to 2.2 mol%.

The final MDPE which results preferably has a $MFR_{21}$ of 5 to 200 g/10 min, preferably 10 - 100.0 g/10 min as measured according to ISO 1133 at 190 deg. C under a 21.6 kg load.

A bimodal MDPE produced according to the present invention comprises a low molecular weight (LMW) fraction and a high molecular weight (HMW) fraction.

In a preferred embodiment, the LMW fraction is an ethylene homopolymer with a density in the range of 945 to 980 $kg/m^3$, preferably 950 to 975 $kg/m^3$.

Furthermore, preferably the LMW fraction has a weight average molecular weight Mw of 20 000 to 50 000 g/mol, more preferably 25 000 to 40 000 g/mol.

The $MFR_2$ of the LMW fraction preferably is at least 5 g/10min, more preferably at least 10 g/10min. The upper limit for the $MFR_2$ of the LMW fraction is 300 g/10min, preferably 200 g/10 min.

In a particularly preferred method of the invention the LMW fraction produced in the first stage preferably comprises 30 to 70, more preferably 40 to 60 % by weight of the total weight of the final polymer.

The comonomer content in the HMW copolymer fraction is up to 4.0 mol%, preferably up to 3.7 mol%.

The final multi-, preferably bimodal HDPE produced according to the invention has a density according to ISO 1183 of at least 950 $kg/m^3$ up to 980 $kg/m^3$, preferably of at least 955 $kg/m^3$ up to 965 $kg/m^3$.

The final HDPE can have an overall comonomer content of up to 6 mol%. More preferably, however, the final polymer has a comonomer content of up to 4 mol %. The amount of comonomer in the HDPE produced in the second stage can be calculated based on the final amount present in the HDPE, the amount in the polymer produced in the first stage and on the production split between the first and second stages

The final HDPE which results preferably has a $MFR_2$ of 0.4 to 100 g/10 min, preferably 0.8 - 6.0 g/10 min as measured according to ISO 1133 at 190°C under a 2.16 kg load.

A bimodal HDPE produced according to the present invention comprises a low molecular weight (LMW) fraction and a high molecular weight (HMW) fraction.

In a preferred embodiment, the LMW fraction is an ethylene homo- or copolymer which has preferably a density of at least 920 $kg/m^3$, a preferred density range being 930 to 960 $kg/m^3$.

Furthermore, preferably the LMW fraction has a weight average molecular weight Mw of 5000 to 50 000 g/mol, more preferably 10 000 to 50 000 g/mol.

The $MFR_2$ of the LMW fraction preferably is at least 50 g/10min, more preferably at least 100 g/10min. The upper limit for the $MFR_2$ of the LMW fraction is preferably 400 g/10min.

The comonomer content in the LMW fraction is preferably in the range of 0.0 to 3.0 mol%, and preferably 0.0 to 2.0 mol%. More preferably there is no comonomer at all in the LMW fraction.

In a particularly preferred method of the invention the LMW fraction produced in the first stage preferably comprises 10 to 90 % by weight, more preferably 30 to 70, still more preferably 40 to 60 % by weight of the total weight of the final polymer.

The preactivating step a) according to the invention gives rise to more even and faster initial reaction in the prepolymerisation reactor and in the slurry reactor.

Therefore it is possible to reduce the number of particles with too low polymerisation degree entering the second polymerisation step, e.g. the gas phase reactor, which would lead to inhomogeneities in the final product and operability problems in the process.

Thus, the process according to the invention shows improved operability and avoids reactor fouling.

In addition, as a result of the invention more homogeneous final polyethylene product is obtained compared to products produced by non-preactivated or partially preactivated ZN polymerisation catalyst compositions. In the bimodal polyethylene compositions produced according to the invention there are less agglomerated gel components formed by particles producing very HMW polymer components. Thus excellent homogeneity is achieved.

In step f) the obtained polymerisation product is further processed into pellets by extrusion.

The polyethylene compositions of the present invention may also comprise conventional additives such as antioxidants, UV stabilisers, acid scavengers, anti-blocking agents, polymer processing agent etc. The amounts of these compounds may be readily determined by those skilled in the art. These may be added to the polymer using conventional techniques.

The polymers produced according to the method of the present invention can be used to form articles, such as films or pipes, preferably films.

Thus, a film of the present invention comprises at least one layer, which layer comprises the polyethylene composition of the invention alone or together with further, e.g. one or two, polymer component(s) and optionally together with additives conventionally used in the film production, as defined above. Thus the films of the present invention may comprise a single layer (i.e. monolayer) or may be multilayered (e.g. comprise 2 to 7 layers). Multilayer films preferably comprise typically 2 to 5 layers, especially 2 or 3 layers.

The films therefore can comprise one of the above described polyethylene compositions, i.e. the LLDPE, the MDPE or the HDPE prepared according to the invention, as sole component, but it is also possible to use combinations therefrom or combinations of one of polyethylenes, i.e. LLDPE, the MDPE or the HDPE, prepared according to the invention with one or two state of the art polymer components selected from the group of LLDPE, MDPE, HDPE and LDPE, known to be suitable in film production.

For film formation using a polymer mixture, e.g. a multimodal polyethylene of the invention in combination with another polymer component or simply with standard additives, it is important that the different polymer components be intimately mixed prior to extrusion and blowing of the film as otherwise there is a risk of inhomogeneities, e.g. gels, appearing in the film. Thus, it is especially preferred to thoroughly blend the components, for example using a twin screw extruder, preferably a counter-rotating extruder prior to extrusion and film blowing. Sufficient homogeneity can also be obtained by selecting the screw design for the film extruder such that it is designed for good mixing and homogenising.

The film may be produced by any conventional technique known in the art, such as by casting or blowing techniques - oriented or not - from an extruded or calendered, preferably extruded polyethylene composition according to the invention.

Thus the film may be produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the film is a multilayer film then the various layers are typically coextruded. The skilled man will be aware of suitable extrusion conditions. Generally, however, extrusion is carried out at a temperature in the range 160°C to 240°C, and cooled by blowing gas (generally air) at a temperature of 10 to 50°C to provide a frost line height of up to 10 times, typically of 2 to 8 times the diameter of the die. The blow up ratio should generally be in the range 2 to 5, preferably 2.5 to 4.

The thickness of the film is not critical and depends on the end use.

As used herein, the term "film" or "films" includes skins, sheets, or membranes of a thickness of from 2000 $\mu$m to 10 $\mu$m, more preferably from 1000 $\mu$m to 20 $\mu$m, and even more preferably from 500 $\mu$m to 25 $\mu$m, and most preferably from 200 $\mu$m to 40 $\mu$m, (e.g. cast films can have a thickness below 50 $\mu$m, even about 40 $\mu$m).

The use of the polyolefin films can include any number of functions such as wrapping, protecting, packaging, bagging, coating, co-extrusion with other materials; and further, may have any commercially desirable dimensions of width, length, etc. The films of the present invention are not limited to transparent films, and may be opaque or translucent or transparent, preferably transparent, and have other properties as defined herein. The films of the present invention may further be co-extruded with or otherwise secured or laminated to other films/sheets/structures and thus can form structures of thickness greater than 2000 $\mu$m.

Films made using the polyethylene compositions of the invention exhibit a low number of gels.

Thus it is a further embodiment of the present invention to use the polyethylene compositions produced according to the process of the present invention for producing films with a low level of gels.

An additional embodiment of the present invention is also a process for producing articles from polyethylene compositions, said process comprises the steps of

a) preactivating the total amount of a Ziegler-Natta procatalyst, which procatalyst comprises

  i) an Al compound having the formula $Al(alkyl)_X Cl_{3-X}$ (I), where alkyl is an alkyl group with 1 to 12 C-atoms and $0 <\_ x <\_ 3$,

  ii) a magnesium hydrocarbyloxy compound of formula $Mg(OR^1)_{2-n}(R^2)_n$ (II), wherein each R' and $R^2$ is independently a $C_l$-$C_{20}$ hydrocarbon residue which may optionally be substituted with halogen and $0 \leq n < 2$ and

  iii) a chlorine-containing titanium compound of the formula $Cl_y Ti(OR^3)_{4-\gamma}$ (III), wherein $R^3$ is a $C_2$-$C_{20}$ hydrocarbon residue and y is 1, 2, 3 or 4 and

compounds a), b) and c) being deposited on a particulate inorganic support;
with the total amount of a cocatalyst, which cocatalyst comprises an organoaluminium compound having formula $R_{3m-p}Al_m X_p$ (IV), wherein R is a $C_i$-$C_{12}$ alkyl, X is a halogen, m is 1 or 2 and 0 5 p 5 (3m-1 ),
in order to get a preactivated Ziegler-Natta catalyst system,
b) introducing the preactivated Ziegler-Natta catalyst system into a prepolymerisation reactor, wherein the preactivated Ziegler-Natta catalyst system is prepolymerised with at least one $C_2$-$C_{io}$-alpha-olefin monomer and optionally one or more $C_3$-$C_{lo}$-alpha-olefin comonomer,
in order to get a prepolymerisation product,
c) introducing the prepolymerisation product into a first polymerisation reactor, which comprises a slurry reactor, wherein the prepolymerisation product is further polymerised with ethylene monomers and optionally one or more $C_3$-$C_{io}$-alpha-olefin comonomers
in order to get a first polymerisation product,
d) introducing the first polymerisation product into a second polymerisation reactor, wherein the first polymerisation product is further polymerised with ethylene monomers and optionally one or more $C_3$-$C_{10}$-alpha-olefin comonomers
in order to get a second polymerisation product,
e) optionally performing one or two subsequent polymerisation steps in order to get a third or fourth polymerisation product,
g) further processing the obtained polymerisation product into pellets by extrusion and
f) forming the article, preferably forming a film.

## Experimental part

### 1. Methods

### Melt Flow Rate

The melt flow rate (MFR) is determined according to ISO 1133 and is indicated in g/ 10 min. The MFR is an indication of the flowability, and hence the processability, of the polymer. The higher the melt flow rate, the lower the viscosity of the polymer and the molecular weight. The MFR is determined at 190°C for polyethylene. It may be determined at different loadings such as 2.16 kg ($MFR_2$), 5 kg ($MFR_5$) or 21.6 kg ($MFR_{21}$).

### Flow Rate Ratio

The quantity FRR (flow rate ratio) is an indication of molecular weight distribution and denotes the ratio of flow rates at different loadings. Thus, $FRR_{21/5}$ denotes the value of $MFR_{21}/MFR_5$.
**Density** was determined according to ISO 1183 on compression-moulded specimens.
**Comonomer content** of the obtained products was measured in a known manner based on Fourier transform infrared spectroscopy (FTIR) calibrated with $^{13}$ C-NMR, using Nicolet Magna 550 IR spectrometer together with Nicolet Omnic FTIR software.
Films having a thickness of about 220 to 250 $\mu$m were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.
The comonomer content was determined from the absorbance at the wave number of approximately 1378

cm-1. The comonomer used in the calibration samples was the same as the comonomer present in the samples. The analysis was performed by using the resolution of 2 cm-1, wave number span of from 4000 to 400 cm-1 and the number of sweeps of 128. At least two spectra were run from each film.

The comonomer content was determined from the spectrum from the wave number range of from 1430 to 1100 cm-1. The absorbance is measured as the height of the peak by selecting the so-called short or long base line or both. The short base line is drawn in about 1410 - 1320 cm-1 through the minimum points and the long base line about between 1410 and 1220 cm-1. Calibrations need to be done specifically for each base line type. Also, the comonomer content of the unknown sample needs to be within the range of the comonomer contents of the calibration samples.

**Elemental analysis of the catalysts**

The elemental analysis of the catalysts was performed by taking a solid sample of mass, M, cooling over dry ice. Samples were diluted up to a known volume, Vol, by dissolving in nitric acid ($HNO_3$, 65 %, 5 % of Vol) and freshly deionised (DI) water (95 % of Vol), the samples were left to stabilize for two hours. The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$ in DI water), a low standard (10 ppm Al in a solution of 5 % HNO3 in DI water, a high standard (100 ppm Mg, 50 ppm Al, 50 ppm Ti in a solution of 5 % $HNO_3$ in DI water) and a quality control sample (50 ppm Mg, 20 ppm Al, 20 ppm Ti and in a solution of 5 % $HNO_3$ in DI water).

The content of aluminium was monitored via the 167.081 nm line, when Al concentration in ICP sample was between 0-10 ppm and via the 396.152 nm line for Al concentrations between 10-100 ppm. The magnesium concentration was monitored via the 285.213 nm line and the titanium content via the 323.452 nm line.

The reported values, required to be between 0 and 100, or further dilution is required, are an average of three successive aliquots taken from the same sample and are related back to the original catalyst using equation 1.

$$C = (R \times Vol)/M \qquad \text{Equation 1}$$

Where: C is the concentration in ppm, related to % content by a factor of 10,000, R is the reported value from the ICP-AES, Vol is the total volume of dilution in ml, M is the original mass of sample in g.

If dilution was required then this also needs to be taken into account by multiplication of C by then dilution factor.

**Homogeneity** of the final PE product was analyzed by an Optical Control System (OCS; Film-Test FSA100), provided by Optical Control Systems GmbH, which measures gels and contaminants in the film produced from the PE. The gels and contaminants are recognized optoelectronically by their different light transmittance compared to the film matrix. A translucent 70 μm thick blown film was photographed using high resolution line cameras and appropriate background illumination. The number and the area of gels per total film area are then calculated using an image recognition software.

**Dart Drop Impact** is determined by Dart-drop (g/50%). Dart-drop is measured using ISO 7765-1, method "A". A dart with a 38 mm diameter hemispherical head is dropped from a height of 0.66 m onto a film clamped over a hole. If the specimen fails, the weight of the dart is reduced and if it does not fail the weight is increased. At least 20 specimens are tested. The weight resulting in failure of 50% of the specimens is calculated.

**Elmendorf Tear Resistance** was measured at room temperature on 75*63 mm2 films having a thickness of XY μm with a precut slit of 20 mm parallel to the 63mm-side according to ISO 6383/2-93

**Tensile Modulus** (0.05-0.25%) is measured according to ISO 527-3 on film samples prepared as described under the Film Sample preparation and in tables with film thickness XY at a cross head speed of 1 mm/min. Test speed was changed after a deformation of 0,25 %.

Specimen type 2 acc. ISO 527-3: stripes with a width of 15 mm and length: 200 mm

**Haze** was measured according to ASTM D 1003

## EXAMPLES

### Preparation of the Catalyst

*a) Preparation of Mg complex*

87 kg of toluene was added into a multi-purpose reactor. Then 45.5 kg Bomag A (20% solution in heptane) were added to the reactor. 161 kg 99.8 % 2-ethyl-1-hexanol (2-EHA) were then introduced into the reactor at a flow rate of 24-40 kg/h. 2-EHA had been earlier dried with molecular sieves. The reaction temperature was kept below 38°C. The solution was mixed for 30 minutes and cooled to room temperature.
The molar ratio between BOMAG-A and 2-ethyl-1-hexanol was 1:1.83.

*b) Solid procatalyst preparation:*

275 kg silica (ES747JR of Crossfield, having average particle size of 20 $\mu$m) activated at 600°C in nitrogen were charged into a catalyst preparation reactor. Then 411 kg 20 % EADC (2.0 mmol/g silica) diluted in 555 litres pentane were added into the reactor at ambient temperature during one hour. The temperature was then increased to 35°C while stirring the treated silica for one hour. The silica was dried at 50°C for 8.5 hours. Then 655 kg of the complex prepared as described above (2 mmol Mg/g silica) were added at 23°C during ten minutes. 86 kg pentane were added into the reactor at 22°C during ten minutes. The slurry was stirred for 8 hours at 50°C. Finally 52 kg TiCl$_4$ were added during 0.5 hours at 45°C. The slurry was stirred at 40°C for five hours. The catalyst was then dried by purging with nitrogen.
Procatalyst composition was: 3.1wt% of Al, 2.3wt% of Mg, 2.3wt% of Ti and 14.1 wt% of Cl.

### EXAMPLE 1 and Comparative Examples 1 (CE1 ) and 2 (CE2) and 3 (CE3)

### Two-stage polymerisation pilot scale

A continuously operated Borstar® process consisting of a pre-polymerisation reactor, one loop reactor and one gas phase reactor was used in pilot scale.
Four lots of LLDPE were produced, one trial with 100% catalyst preactivation (Inventive example 1 ), one trial with 50% catalyst preactivation (CE1) and two references (CE2, CE3) without preactivation.
100% of the procatalyst, produced as described above, were fed via the prepolymerisation reactor, whereas the cocatalyst triethyl aluminium (TEA) feed was either splitted 50:50 between the prepolymerisation reactor and the loop reactor or it was directed 100% via the prepolymerisation reactor.

### Preactivation step:

Preactivation was performed in an extended catalyst feed line with a cocatalyst connection. The cocatalyst connection was perpendicular to the catalyst feed line in order to facilitate mixing.
The catalyst was fed as dilute oil suspension. Preactivation times can be seen in Table 1.

**Table 1**: Cocatalyst feed split and preactivation times

|  | Inventive Example | CE1 | CE2 | CE3 |
|---|---|---|---|---|
| % of TEA to prepoly precontant time | 100% 2.8 min | 50% 3.1 min | 50% 0 min | 100% 0 min |
| % of TEA to loop precontant time | 0% | 50% 0 min | 50% 0 min | 0% |

### Prepolymerisation step

Catalyst was fed continuously into prepolymerisation loop reactor. Prepolymerisation conditions according to Table 2.

**Loop reactor zone**

Prepolymerised catalyst/polymer was transferred continuously into a loop reactor having a volume 500 dm$^3$ and which was operated at 85°C temperature and 57 bar pressure. Into the reactor were introduced propane diluent, ethylene, butene comonomer and hydrogen. Constant loop reactor conditions are listed in Table 2.

The slurry was intermittently withdrawn from the reactor without settling leg and directed to a flash tank operated at a temperature of about 50°C and a pressure of about 3 bar.

**Gas phase reactor zone**

From the flash tank the powder, containing a small amount of residual hydrocarbons, was transferred into a gas phase reactor operated at 80°C temperature and 20 bar pressure. Into the gas phase reactor additional ethylene, butene comonomer and nitrogen as inert gas were introduced. Constant gas phase reactor conditions are listed in Table 2.

The polymer was then removed from the gas phase reactor through batch outlet vessels to flash tank operated at temperature of about 60 °C. In flash tank major part of hydrocarbons were separated from polymer powder which was then further batchwise moved to product dryer. Product dryer was operated at temperature of about 50 °C, moving and degassing powder by rotary blade wheel. After product dryer powder was transferred under nitrogen blanket to product silo. From product silo powder was transferred to mixer silo, still under nitrogen blanket. In mixer silo 1200ppm Irganox B561 and 500ppm Calciumstearat were added before melting powder and pelletising it to final product.

Process conditions and basic final properties of the materials (density, MFR) are presented in Table 2.

**Table 2:**

| Example | | IE | CE1 | CE2 | CE3 |
|---|---|---|---|---|---|
| **Prepolymerisation** | | | | | |
| Temperature | °C | 70 | 70 | 70 | 70 |
| Pressure | bar | 61 | 61 | 61 | 61 |
| Cocatalyst | g/h | 7.7 | 4.2 | 3.9 | 8.0 |
| Precontact time | min | 2.8 | 3.1 | 0 | 0 |
| **Loop** | | | | | |
| Temperature | °C | 85 | 85 | 85 | 85 |
| Pressure | bar | 57 | 57 | 57 | 57 |
| Cocatalyst | g/h | 0 | 3.6 | 3.8 | 0 |
| $C_2$ concentration | mol% | 5.3 | 5.4 | 5.5 | 5.4 |
| $H_2/C_2$ ratio | mol/kmol | 262 | 246 | 248 | 283 |
| $C_4/C_2$ ratio | mol/kmol | 469 | 408 | 446 | 480 |
| $MFR_2$ | g/10 min | 284 | 270 | 215 | 387 |
| Density | kg$_{/m3}$ | 951.2 | 952.5 | 950.8 | 951.0 |
| **Gas phase reactor** | | | | | |
| Temperature | °C | 80 | 80 | 80 | 80 |
| Pressure | bar | 20 | 20 | 20 | 20 |
| $C_2$ concentration | mol% | 19 | 20 | 21 | 17 |
| $H_2/C_2$ ratio | mol/kmol | 16 | 14 | 13 | 15 |
| $C_4/C_2$ ratio | mol/kmol | 634 | 626 | 607 | 624 |
| Split Loop/GPR | wt% | 43/57 | 44/56 | 44/56 | 43/57 |
| $MFR_5$ | g/10 min | 1.5 | 1.4 | 1.7 | 1.9 |

(continued)

| Gas phase reactor | | | | | |
|---|---|---|---|---|---|
| MFR$_{21}$ | g/10 min | 32 | 30 | 33 | 41 |
| FRR21 /5 | | 21.3 | 21.4 | 19.4 | 21.6 |
| Density | kg$_{/m3}$ | 922.7 | 920.3 | 920.6 | 921.7 |
| **Finial Properties** | | | | | |
| Final MFR$_5$ | g/10 min | 1.5 | 2.0 | 2.3 | 2.1 |
| Final MFR$_{21}$ | g/10 min | 32 | 39 | 43 | 45 |
| FRR21 /5 | | 21.3 | 19.5 | 18.7 | 21.4 |
| Density pellet | kg$_{/m3}$ | 923.1 | 921.6 | 921.6 | 921.4 |

Preactivation did not have any observable impact on hydrogen/comonomer response.

**Testing**

**A) Homogeneity by OCS**

Film preparation

The pelletized materials have been used for film blowing at a commercial blown-film line Collin 30. Blown films were produced on a single screw extruder with a barrel diameter of 70 mm and a round-section die of 200 mm with 1 mm die gap in combination with a monolip cooling ring and internal bubble cooling (IBC). Melt temperature was 210 °C in the die; the temperature of the cooling air was kept at 15 °C and the blow up ratio (BUR) 3:1. A film thickness of 70 $\mu$m was adjusted through the ratio between extruder output, take off speed and BUR.

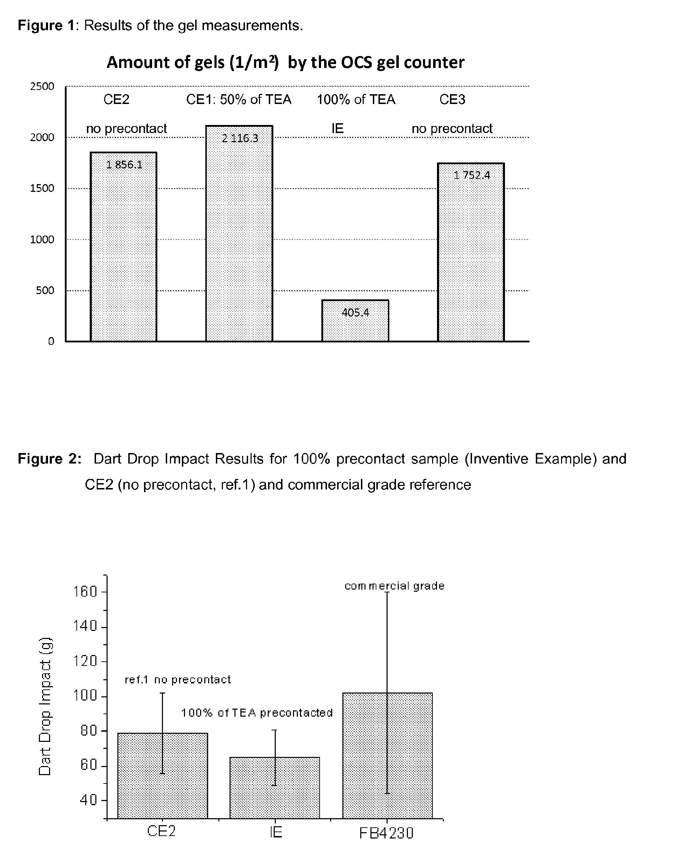

In order to compare the homogeneity of the polymers produced according to IE, CE1 to CE3 the final products were processed to films as described above and 40 m of each film were analyzed by OCS. The results are presented in Figure 1. As can be seen the gel level dropped significantly when the catalyst was precontacted with 100% of TEA feed before entering the prepolymerisation reactor. The reference level of gels was about 1800 1/m$^2$ whereas the 100% precontacted lot of the inventive example had only about 400 1/m$^2$ gels. When only 50% of TEA was precontacted with the catalyst (CE1 ) the positive effect was not seen.

**B) Mechanical and Optical Properties of Films**

40 $\mu$m thick films were blown in the Collin 30 film line for CE2 without any precontact and Inventive Example 100% precontact lots. In addition, FB4230 commercial grade (Borealis@) was blown as a reference. The film processing conditions included the following: a die gap of 2.5 mm, a blow-up ratio of 2:1, a frost line height of 120 mm and an output of 4.6 kg/hr. The film pressure varied from 107-123 bar and the melt temperature was set at 210 °C.

**Dart Drop Impact (DDI)**

The dart drop impact test was measured according to ISO 7765-1. It is a fast impact resistance test which determines the impact energy where 50% of the film samples break.

The dart drop results are shown in Figure 2. The lot with the highest dart drop value is the commercial grade FB4230. However, the difference in DDI between the lots is not so remarkable when taking into account the standard deviation. Moreover, this difference can be ignored due to small differences in density, MFR and split values between the lots. DDI will vary with final density and MFR. Lower density and lower MFR values result in increased DDI values.

**Elmendorf Tear Resistance**

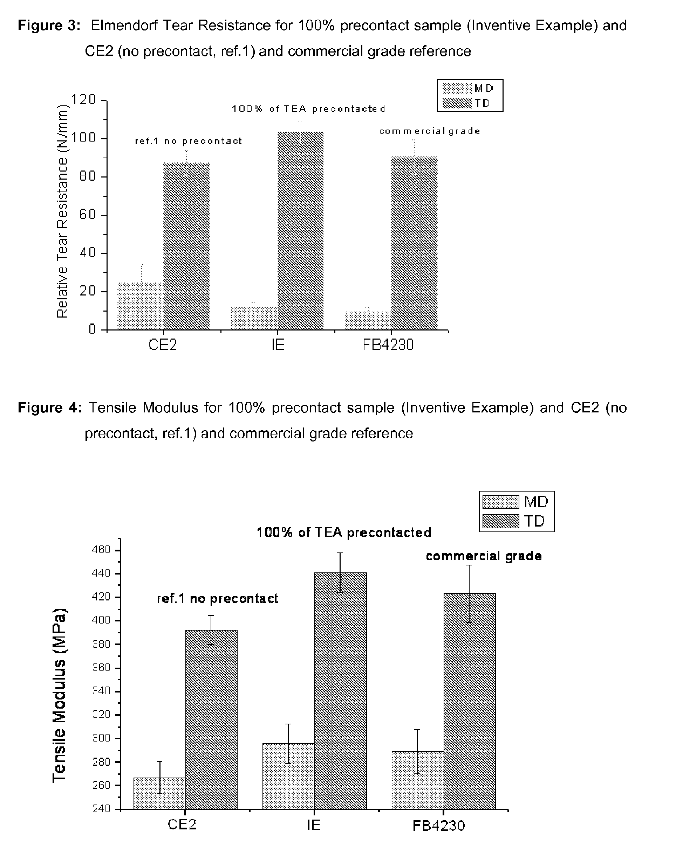

Elmendorf tear resistance was measured according to IS06383/2-93 and measures the average force required to propagate a tear through a specified length of film. The tear resistance results in the tranverse (TD) and machine direction (MD) are shown in Figure 3. No remarkable differences are seen between the lots.

**Tensile Modulus**

The tensile modulus was measured in the machine and transverse direction according to ISO-5273. The stiffness does not vary significantly between the samples. The modulus is slightly lower for the CE2 due to its lower final density. (Figure 4)

**Haze**

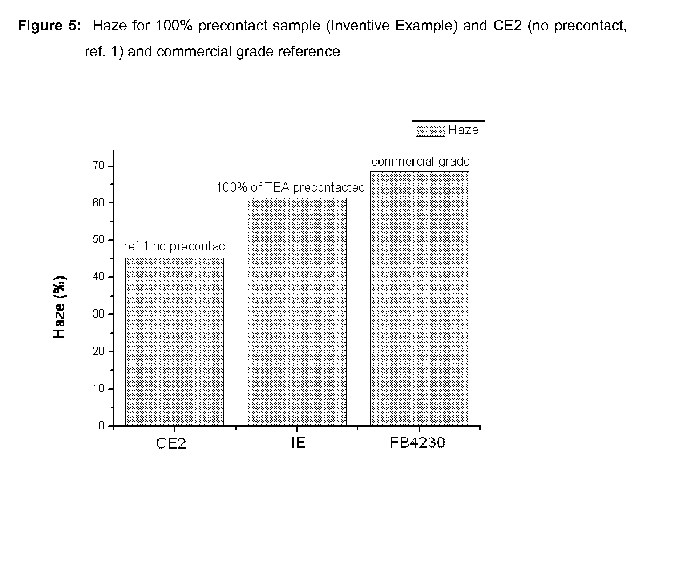

Haze was measured according to ASTM D 1003 and corresponds to the percentage of transmitted light scattered more than 2.5' d from the normal incident beam. Haze is related to surface roughness and can be correlated to molecular broadness. The results for haze are shown in Figure 5.

CE2 has a lower haze value compared to the others, 45% versus 62% and 69% for Inventive Example and FB4230 respectively. This can be attributed to the lower loop MFR of CE2 compared to the other two lots.

In brief, the mechanical and optical properties are not negatively affected by preactivation of the Ziegler-Natta procatalyst.

**Claims**

1. Process for producing polyethylene compositions with a high level of homogeneity which comprises the steps of

   a) preactivating the total amount of a Ziegler-Natta procatalyst, which procatalyst comprises

      i) an Al compound having the formula $Al(alkyl)_xC1_{3-x}$ (I), where alkyl is an alkyl group with 1 to 12 C-atoms and $0 <\_ x <\_ 3$,

      ii) a magnesium hydrocarbyloxy compound of formula $Mg(OR^1h-_n(R^2)_n$ (II), wherein each $R^1$ and $R^2$ is independently a $C_1$-$C_{20}$ hydrocarbon residue which may optionally be substituted with halogen and $0 < n < 2$ and

      iii) a chlorine-containing titanium compound of the formula $ClyTi(OR^3)_{4-\gamma}$ (111), wherein $R^3$ is a $C_2$-$C_{20}$ hydrocarbon residue and y is 1, 2, 3 or 4 and

   compounds a), b) and c) being deposited on a particulate inorganic support;

   with the total amount of a cocatalyst, which cocatalyst comprises an organoaluminium compound having formula $R_{3m\_}pAl_mXp$ (IV), wherein R is a $C_i$-$C_{12}$ alkyl, X is a halogen, m is 1 or 2 and $0 \le p \le (3m-1)$,

   in order to get a preactivated Ziegler-Natta catalyst system,

   b) introducing the preactivated Ziegler-Natta catalyst system into a prepolymerisation reactor, wherein the preactivated Ziegler-Natta catalyst system is prepolymerised with at least one $C_2$-$C_{io}$-alpha-olefin monomer and optionally one or more $C_3$-$C_{lo}$-alpha-olefin comonomer,

   in order to get a prepolymerisation product,

   c) introducing the prepolymerisation product into a first polymerisation reactor, which comprises a slurry reactor, wherein the prepolymerisation product is further polymerised with ethylene monomers and optionally one or more $C_3$-$C_{lo}$-alpha-olefin comonomers

   in order to get a first polymerisation product,

   d) introducing the first polymerisation product into a second polymerisation reactor, wherein the first polymerisation product is further polymerised with ethylene monomers and optionally one or more $C_3$ to $C_{1O}$-alpha-olefin comonomers

   in order to get a second polymerisation product,

   e) optionally performing one or two subsequent polymerisation steps in order to get a third or fourth polymerisation product,

   g) further processing the obtained polymerisation product into pellets by extrusion.

2. Process according to claim 1 wherein the procatalyst is obtainable by

   - contacting said inorganic support with the alkyl aluminium chloride i) to give a first reaction product,
   - contacting said first reaction product with the magnesium complex ii) to give a second reaction product and
   - contacting said second reaction product with the titanium compound iii) to give said procatalyst.

3. Process according to claim 1 wherein the procatalyst is obtainable by

- reacting the magnesium complex ii) with the alkyl aluminium chloride i) in a non polar hydrocarbon solvent in which said magnesium complex is soluble to produce a solution (A)
- contacting said solution (A) with the titanium compound iii) to produce a solution (B) and
- contacting said solution (B) with said inorganic support to give said procatalyst.

4. Process according to any of preceding claims 1 to 3 wherein the procatalyst is composed of ethyl aluminium dichloride as catalyst component i), a magnesium complex ii) prepared by reacting butyl octyl magnesium and 2-ethyl-l-hexanol, and titanium tetrachloride as component iii), which are deposited on a silica support.

5. Process according to any of preceding claims 1 to 4 wherein the cocatalyst is selected from the group of triethyl aluminium, triisobutyl aluminium, diethyl aluminium chloride or trimethyl aluminium or mixtures therefrom.

6. Process according to any of preceding claims 1 to 5 wherein the temperature for the preactivation step is between -50°C and +100°C, preferably between -20°C and +50°C and most preferably between -5 and +30°C.

7. Process according to any of preceding claims 1 to 6 wherein the contact time in the preactivation step is in the range of 1 second up to 1 hour, preferably of 10 seconds up to 20 minutes, more preferably 30 seconds to 15 minutes and most preferably 1 minute to 10 minutes.

8. Process according to any of preceding claims 1 to 7 wherein the prepolymerisation step b) is carried out as a slurry polymerisation in a $C_3$-$C_{lo}$-hydrocarbon solvent at a temperature of 5 to 80°C, a pressure of 20 to 80 bar with an average residence time of 5 to 90 minutes.

9. Process according to any of preceding claims 1 to 8 wherein the second polymerisation reactor of step d) is a gas phase reactor.

10. Process according to any of preceding claims 1 to 9 wherein the polyethylene composition produced is a bimodal linear low density polyethylene with a density according to ISO 1183 of less than 925 kg/m$^3$ and at least 900 kg/m$^3$, an overall comonomer content of 0.5 to 12 mol%, a MFR$_{21}$ of 0.1 to 100g/10 min according to ISO 1133 (190°C, 21.6 kg load), comprising a low molecular weight copolymer fraction with a density of 930 kg/m$^3$ to 960 kg/m$^3$ according to ISO 1183, a MFR$_2$ of 50 to 400 g/10 min according to ISO 1133 (190°C, 2.16 kg load) and a comonomer content of 0.1 to 3.0 mol% and a high molecular weight fraction, whereby the low molecular weight copolymer fraction is prepared in the first polymerisation step c) and comprises 10 to 90 wt%, preferably 30 to 70 wt% and more preferably 40 to 60 wt% of the total weight of the polyethylene composition.

11. Process according to any of preceding claims 1 to 9 wherein the polyethylene composition produced is a bimodal medium density polyethylene with a density according to ISO 1183 of 925 kg/m$^3$ to less than 950 kg/m$^3$, an overall comonomer content of 0.1 to 2.5 mol%, a MFR$_{21}$ of 5 to 200g/10 min according to ISO 1133 (190°C, 21.6 kg load), comprising a low molecular weight homopolymer fraction with a density of 945 kg/m$^3$ to 980 kg/m$^3$ according to ISO 1183 and a MFR$_2$ of 5 to 300 g/10 min according to ISO 1133 (190°C, 2.16 kg load) and a high molecular weight fraction, whereby the low molecular weight homopolymer fraction is prepared in the first polymerisation step c) and comprises 30 to 70 wt%, preferably 40 to 60 wt% of the total weight of the polyethylene composition.

12. Process according to any of preceding claims 1 to 9 wherein the polyethylene composition produced is a bimodal high density polyethylene with a density according to ISO 1183 of at least 950 kg/m$^3$ to 980 kg/m$^3$, an overall comonomer content up to 10 mol%, a MFR$_2$ of 0.4 to 100g/10 min according to ISO 1133 (190°C, 2.16 kg load), comprising a low molecular weight homopolymer fraction with a density of 930 kg/m$^3$ to 960 kg/m$^3$ according to ISO 1183, a MFR$_2$ of 50 to 400 g/10 min according to ISO 1133 (190°C, 2.16 kg load) and a high molecular weight fraction, whereby the low molecular weight homopolymer fraction is prepared in the first polymerisation step c) and comprises 10 to 90 wt%, preferably 30 to 70 wt% and more preferably 40 to 60 wt% of the total weight of the polyethylene composition.

13. Process according to any of preceding claims 1 to 12 wherein the $C_3$-$C_{io}$-alpha olefin comonomers can be but-1-ene, hex-1-ene, 4-methyl-pent-1-ene, hept-1-ene, oct-1-ene, or dec-1-ene or mixtures therefrom, more preferably the comonomers are but-1-ene and/or hex-1-ene.

14. Process for producing articles from polyethylene compositions, said process comprises the steps of

a) preactivating the total amount of a Ziegler-Natta procatalyst, which procatalyst comprises

i) an Al compound having the formula $Al(alkyl)_X Cl_{3-X}$ (I), where alkyl is an alkyl group with 1 to 12 C-atoms and $0 \leq x \leq 3$,

ii) a magnesium hydrocarbyloxy compound of formula $Mg(OR^1h_{-n}(R^2)_n$ (II), wherein each R' and $R^2$ is independently a $C_l$-$C_{20}$ hydrocarbon residue which may optionally be substituted with halogen and $0 < n < 2$ and

iii) a chlorine-containing titanium compound of the formula $Cl_yTi(OR^3)_{4-Y}$ (111), wherein $R^3$ is a $C_2$-$C_{20}$ hydrocarbon residue and y is 1, 2, 3 or 4 and

compounds a), b) and c) being deposited on a particulate inorganic support;

with the total amount of a cocatalyst, which cocatalyst comprises an organoaluminium compound having formula $R_{3m-p}Al_m X_p$ (IV), wherein R is a $C_1$-$C_{12}$ alkyl, X is a halogen, m is 1 or 2 and $0 \leq p \leq (3m-1)$,

in order to get a preactivated Ziegler-Natta catalyst system,

b) introducing the preactivated Ziegler-Natta catalyst system into a prepolymerisation reactor, wherein the preactivated Ziegler-Natta catalyst system is prepolymerised with at least one $C_2$ to $C_{10}$-alpha-olefin monomer and optionally one or more $C_3$ to $C_{10}$-alpha-olefin comonomer,

in order to get a prepolymerisation product,

c) introducing the prepolymerisation product into a first polymerisation reactor, which comprises a slurry reactor, wherein the prepolymerisation product is further polymerised with ethylene monomers and optionally one or more $C_3$ to $C_{10}$-alpha-olefin comonomers

in order to get a first polymerisation product,

d) introducing the first polymerisation product into a second polymerisation reactor, wherein the first polymerisation product is further polymerised with ethylene monomers and optionally one or more $C_3$ to $C_{lo}$-alpha-olefin comonomers

in order to get a second polymerisation product,

e) optionally performing one or two subsequent polymerisation steps in order to get a third or fourth polymerisation product,

f) further processing the obtained polymerisation product into pellets by extrusion and

g) forming the article.

**15.** Process according to claim 14, wherein the article formed is a film.

**16.** Process according to claim 15, wherein the film has a low gel content.

**Figure 1**: Results of the gel measurements.

## Amount of gels (1/m²) by the OCS gel counter

**Figure 2**: Dart Drop Impact Results for 100% precontact sample (Inventive Example) and CE2 (no precontact, ref.1) and commercial grade reference

**Figure 3:** Elmendorf Tear Resistance for 100% precontact sample (Inventive Example) and CE2 (no precontact, ref.1) and commercial grade reference

**Figure 4:** Tensile Modulus for 100% precontact sample (Inventive Example) and CE2 (no precontact, ref.1) and commercial grade reference

**Figure 5:** Haze for 100% precontact sample (Inventive Example) and CE2 (no precontact, ref. 1) and commercial grade reference

Europäisches
Patentamt

European
Patent Office

Office européen
des brevets

## EUROPEAN SEARCH REPORT

Application Number

EP 10 17 6381

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/44795 A1 (BOREALIS POLYMERS OY [FI]; PALMQVIST ULF [SE]; JOHANSSON SOLVEIG [SE];) 3 August 2000 (2000-08-03)<br>* claims 1,27,28,56,57,61 *<br>* page 2, line 16 - page 3, line 23 *<br>* page 8, line 23 - page 9, line 28 *<br>* page 13 - page 15; examples 7,8 *<br>----- | 1-16 | INV.<br>C08F10/02 |
| X,D | WO 2004/050722 A1 (BOREALIS TECH OY [FI]; CHU KYUNG-JUN [FI]; GAROFF THOMAS [FI]; WALDVOG) 17 June 2004 (2004-06-17)<br>* claims 1-5,13,14 *<br>* page 2, line 14 - page 3, line 13 *<br>* page 18, line 23 - page 19, line 27 *<br>* page 20 - page 23; examples 1-10 *<br>----- | 1-16 | |
| X,D | WO 01/55230 A1 (BOREALIS TECH OY [FI]; GAROFF THOMAS [FI]; JOHANSSON SOLVEIG [SE]; WAL) 2 August 2001 (2001-08-02)<br>* claims 1,2,7-12 *<br>* page 1, line 13 - line 16 *<br>* page 3, line 25 - page 4, line 2 *<br>* page 10, line 15 - page 12, line 6 *<br>* page 12, line 35 - line 37 *<br>* page 17 - page 19; examples 1-5 *<br>----- | 1-16 | TECHNICAL FIELDS SEARCHED (IPC)<br><br>C08F |
| E | EP 2 228 395 A1 (BOREALIS AG [AT]) 15 September 2010 (2010-09-15)<br>* the whole document *<br>----- | 1-16 | |
| E | EP 2 228 394 A1 (BOREALIS AG [AT]) 15 September 2010 (2010-09-15)<br>* the whole document *<br>----- | 1-16 | |
| E | EP 2 246 372 A1 (BOREALIS AG [AT]) 3 November 2010 (2010-11-03)<br>* the whole document *<br>----- | 1-16 | |

-/--

The present search report has been drawn up for all claims

| Place of search | Date of completion of the search | Examiner |
|---|---|---|
| Munich | 15 February 2011 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 10 17 6381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 570 199 A1 (BP CHEM INT LTD [GB]; BP CHEMICALS SNC [FR]) 18 November 1993 (1993-11-18) * the whole document * ----- | 1-16 | |
| A | US 2002/042472 A1 (ONG S CHRISTINE [US] ET AL) 11 April 2002 (2002-04-11) * the whole document * ----- | 1-16 | |
| | | | **TECHNICAL FIELDS SEARCHED (IPC)** |

The present search report has been drawn up for all claims

| Place of search | Date of completion of the search | Examiner |
|---|---|---|
| Munich | 15 February 2011 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 17 6381

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2011

| Patent document cited in search report | | Publication date | Patent family member(s) | | Publication date |
|---|---|---|---|---|---|
| WO 0044795 | A1 | 03-08-2000 | AU | 2297700 A | 18-08-2000 |
| WO 2004050722 | A1 | 17-06-2004 | AU | 2002367755 A1 | 23-06-2004 |
| WO 0155230 | A1 | 02-08-2001 | AT | 432949 T | 15-06-2009 |
| | | | AU | 2869101 A | 07-08-2001 |
| | | | CN | 1416438 A | 07-05-2003 |
| | | | EP | 1265934 A1 | 18-12-2002 |
| | | | US | 2003008769 A1 | 09-01-2003 |
| EP 2228395 | A1 | 15-09-2010 | WO | 2010097352 A1 | 02-09-2010 |
| EP 2228394 | A1 | 15-09-2010 | WO | 2010097351 A1 | 02-09-2010 |
| EP 2246372 | A1 | 03-11-2010 | WO | 2010125020 A1 | 04-11-2010 |
| EP 0570199 | A1 | 18-11-1993 | FR | 2691155 A1 | 19-11-1993 |
| | | | JP | 6049128 A | 22-02-1994 |
| US 2002042472 | A1 | 11-04-2002 | NONE | | |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- EP 0797599 A
- WO 2006014475 A
- WO 2004050722 A
- WO 9634899 A
- EP 0435557 A
- US 4349648 A
- EP 0688794 A
- EP 0835887 A
- WO 0155230 A
- WO 9733920 A
- WO 0021656 A
- WO 9619503 A
- WO 9632420 A
- US 4582816 A
- US 3405109 A
- US 3324093 A
- EP 479186 A

- US 5391654 A
- EP 0517868 A
- WO 9212182 A
- WO 9618662 A
- EP 1633466 A
- EP 2011822 A
- US 3374211 A
- US 3242150 A
- EP 1310295 A
- EP 891990 A
- EP 1415999 A
- EP 1591460 A
- EP 1860125 A
- EP 707513 A
- EP 1484343 A
- WO 9704015 A

## Non-patent literature cited in the description

- **GELDART.** Gas Fluidization Technology. J.Wiley & Sons, 1986
- Modelling, Estimation and Control of Product Properties in a Gas Phase Polyethylene Reactor. **K. B. MCAULEY.** Thesis. McMaster University, August 1991
- **K. MCAULEY ; J. MCMACGREGOR.** *AIChE Journal,* vol. 37 (6), 825-835
- *Conference on Polymer Processing,* 19 August 1997, vol. 4, 13